# EUROPÄISCHE PATENTSCHRIFT

(11) **EP 3 854 073 B1**
(45) Veröffentlichungstag und Bekanntmachung des Hinweises auf die Patenterteilung: **06.05.2026**
(21) Anmeldenummer: 19742013.6
(22) Anmeldetag: 15.07.2019
(51) Int. Cl.: H04N 9/31, F21S 8/08, G06V 40/10

(54) **DYNAMISCHE UMGEBUNGSPROJEKTION**
DYNAMIC PROJECTION OF THE SURROUNDINGS
PROJECTION ENVIRONNANTE DYNAMIQUE

(30) Priorität: 21.09.2018 DE 102018123341
(43) Veröffentlichungstag der Anmeldung: 28.07.2021
(73) Patentinhaber: Innogy SE, 45128 Essen (DE)
(72) Erfinder: JOTZO, Lars, 59399 Olfen (DE)
(74) Vertreter: Cohausz & Florack
(86) Internationale Anmeldenummer: PCT/EP2019/069033
(87) Internationale Veröffentlichungsnummer: WO 2020/057802

(56) Entgegenhaltungen:
- WO-A1-2017/015067
- DE-A1- 102012 206 691
- US-A1- 2016 328 066
- US-A1- 2018 182 111
- US-B1- 9 459 519

## Beschreibung

### Gebiet

Beispielhafte Ausführungsformen betreffen die dynamische Umgebungsprojektion insbesondere für visuelle Informationen, die beispielsweise im Freien projiziert werden, so dass diese durch eine oder mehrere Personen wahrnehmbar sind.

### Hintergrund

Straßenbeleuchtungen mit einer gewissen Intelligenz sind aus dem Stand der Technik bekannt. Derartige Straßenbeleuchtungen sollen neben einer effizienten Beleuchtung von zumindest einem Abschnitt einer Straße, einem öffentlichen Platz oder dergleichen, insbesondere weitere Anwendungsfälle bedienen können, wie etwa das Laden von Elektrofahrzeugen ermöglichen oder einen drahtlosen Internetzugang bereitstellen.

Derartige intelligente Straßenbeleuchtungen sind dabei als eigenständige Leuchten, oder aber auch als sogenannte Retrofitmodule bekannt, wobei letztere an einer bereits bestehenden konventionellen Straßenbeleuchtung installiert werden können, so dass die Straßenbeleuchtung zur intelligenten Straßenbeleuchtung aufgewertet werden kann. Derartige intelligente Straßenbeleuchtungen werden auch mit dem Begriff "Smartpole" bezeichnet.

US 2018/182111 A1 offenbart Systeme und Verfahren zur Projektion von Informationen im öffentlichen Raum, wobei projizierte Inhalte abhängig von erfassten Umgebungsbedingungen oder Nutzerinformationen dynamisch angepasst werden können. Die Vorrichtungen können Sensoren zur Erkennung von Objekten oder Personen umfassen und steuern in Abhängigkeit der ermittelten Daten die Art, Position oder Darstellung der projizierten Informationen.

DE 10 2012 206691 A1 offenbart eine Beleuchtungseinrichtung, die zusätzlich zu ihrer Lichtfunktion Informationen in Form von Bildern, Symbolen oder Hinweisen projizieren kann. Die Projektion kann insbesondere zur Verkehrsführung, zur Warnung oder zur Informationsbereitstellung genutzt werden und basiert auf einer Kombination aus Beleuchtungsmodul und Projektionsmodul.

US 2016/328066 A1 offenbart ein System zur objektspezifischen Projektion von Informationen im urbanen Umfeld. Sensoren erfassen Bewegungsdaten oder Klassifizierungen von Objekten, und ein Projektor stellt kontextabhängige Informationen wie Navigationshinweise, Warnungen oder sonstige visuelle Markierungen bereit, die sich an der erfassten Position oder Bewegung des Objekts orientieren.

WO 2017/015067 A1 offenbart eine tragbare Projektionseinheit, die dazu ausgelegt ist, Bild- oder Informationsinhalte auf eine Umgebungsfläche zu projizieren. Die Projektionseinheit umfasst typischerweise ein Gehäuse mit integrierter Projektionsoptik und Lichtquelle und kann so ausgebildet sein, dass sie flexibel an verschiedenen Orten eingesetzt und auf unterschiedliche Flächen ausgerichtet werden kann. Vorrichtungen zur Energieversorgung und ggf. zur Steuerung oder Auswahl der projizierten Inhalte sind in der tragbaren Einheit integriert.

Nachteilig ist, dass die bekannten intelligenten Straßenbeleuchtungen bisher nicht nutzerindividualisierte und/oder ortsabhängige (z. B. Aufstellungsort einer Straßenbeleuchtung) Dienste bereitstellen können.

### Zusammenfassung einiger beispielhafter Ausführungsformen der Erfindung

Es wäre wünschenswert, insbesondere im Anwendungsfeld von Beleuchtungen nutzerindividualisierte Dienste bereitstellen zu können. Ferner wäre es wünschenswert, einen anwesenden Nutzer und/oder ein anwesendes Objekt bestimmen zu können, so dass Informationen den erkannten Nutzern und/oder Objekten übermittelt werden können, insbesondere zur Ermöglichung von nutzerindividuellen und/oder ortsabhängigen Diensten.

Gemäß einem ersten beispielhaften Aspekt der Erfindung wird ein Verfahren offenbart, das durch zumindest einen Smartpole als intelligente Straßenbeleuchtung durchgeführt wird und im unabhängigen Anspruch 1 definiert ist.

Gemäß einem zweiten beispielhaften Aspekt der Erfindung wird einen Smartpole offenbart, wie im unabhängigen Anspruch 9 definiert ist.

Gemäß einem dritten beispielhaften Aspekt der Erfindung wird ein System offenbart, wie im Anspruch 10 definiert.

In den abhängigen Ansprüchen werden vorteilhafte Ausführungsformen definiert.

Diese drei Aspekte der vorliegenden Erfindung weisen u.a. die nachfolgend beschriebenen - teilweise beispielhaften - Eigenschaften auf.

Der zumindest eine Smartpole ist beispielsweise ein intelligenter Lichtmast. Alternativ ist der zumindest eine Smartpole ein Modul, das beispielsweise an einem derartigen intelligenten Lichtmast (insbesondere nachträglich) anordenbar ist. Für den Fall, dass der zumindest eine Smartpole beispielsweise ein Modul ist, kann dieses Modul an weiteren Gegenständen, wie etwa an einer Gebäudefassade, an einem Baum, an einer konventionellen Straßenbeleuchtung, oder dergleichen anordenbar sein. Der zumindest eine Smartpole umfasst beispielsweise einen Energiespeicher, so dass der zumindest eine Smartpole autark, insbesondere unabhängig von einem Stromnetzanschluss betreibbar ist. Der zumindest eine Smartpole umfasst beispielsweise Mittel zur Ausgabe (z. B. Wiedergabe) der Projektionsinformation, z. B. einen Projektor. Es versteht sich, dass der zumindest eine Smartpole für den Fall, dass dieser als Modul ausgebildet ist und Mittel zur Ausgabe (z. B. Wiedergabe) der Projektionsinformation umfasst, an jeglichen Gegenständen anordenbar ist, solange die Mittel zur Ausgabe (z. B. Wiedergabe) der Projektionsinformation diese Projektionsinformation wiedergeben können, also z. B. eine Projektion der Projektionsinformation möglich ist. Durch den modularen Aufbau von derartigen intelligenten (Straßen-) Leuchten ist es möglich, eine oder mehrere Spezifikationen stets passgenau auf den konkreten Bedarf, z. B. in Abhängigkeit des Aufstellungsortes, anzupassen. Es versteht sich, dass der vorliegende Gegenstand nicht auf Lichtmasten und/oder Straßenbeleuchtungen, insbesondere öffentlich betriebene Straßenbeleuchtungen limitiert ist. Insbesondere für den Fall, dass der zumindest eine Smartpole ein Modul ist, kann ein derartiges Modul insbesondere auch an Hausbeleuchtungen (sowohl an private, geschäftlichen, als auch öffentlichen Gebäuden), an Einkaufsstraßen, an Geschäften, an Tankstellen oder dergleichen angeordnet werden, insbesondere an denjenigen Orten, an denen bisher auch konventionelle Beleuchtungen eingesetzt werden.

Das Objekt ist beispielsweise ein Mensch (z. B. ein Nutzer) oder ein materieller Gegenstand. Für den Fall, dass das Objekt ein materieller Gegenstand ist, ist insbesondere ein Nutzer mit dem Objekt verknüpft. Z. B. kann es sich bei dem Objekt um ein Automobil handeln, dessen Fahrer der Nutzer ist, um nur ein nicht-limitierendes Beispiel zu nennen. Insbesondere ist das Objekt ein bewegbares bzw. bewegliches Objekt. Das Objekt kann in den Erfassungsradius eintreten und/oder aus diesem austreten. Sobald zumindest ein Teil des Objekts in den Erfassungsradius eingetreten ist, ist das Objekt im Sinne des vorliegenden Gegenstands erfassbar, d.h. zumindest dessen Anwesenheit innerhalb des Erfassungsradius ist erfassbar. Entsprechend kann das Erfassen zunächst solange ausgeführt und/oder gesteuert werden, bis das Objekt innerhalb des Erfassungsradius erfasst werden kann, wenn beispielsweise zunächst kein Objekt in dem Erfassungsradius angeordnet ist.

Das Erfassen des Objekts erfolgt mittels zumindest eines Sensors bzw. einer Sensorik. Der zumindest eine Sensor ist beispielsweise dazu ausgebildet, eine oder mehrere Objekte, die innerhalb des definierten Erfassungsradius bzw. zumindest teilweise, d.h. nicht vollständig, innerhalb des Erfassungsradius angeordnet sind, zu erkennen bzw. zu detektieren. Der zumindest eine Sensor erfasst beispielsweise eine Information, die repräsentiert, dass das Objekt innerhalb des Erfassungsradius erkannt ist bzw. wurde.

Der Erfassungsradius kann beispielsweise in Abhängigkeit des Sensors definiert sein. Der Erfassungsradius ergibt sich beispielsweise durch eine (vollständige) Sensorreichweite des zumindest einen Sensors. Beispielsweise kann der Erfassungsradius diejenige Fläche repräsentieren, die mittels des zumindest einen Sensors erfasst (z. B. überwacht) werden kann. Alternativ oder zusätzlich kann der Erfassungsradius auf eine Fläche begrenzt sein, innerhalb der beispielsweise nur Objekte erfasst werden sollen. Eine derartige Begrenzung kann beispielsweise von der Regelinformation umfasst oder repräsentiert sein, z. B. einen Teil der Regelinformation darstellen. Beispielsweise kann sich an eine Fläche, innerhalb der Objekte erfasst werden sollen, eine weitere Fläche anschließen, die z. B. nicht von Interesse ist. Als Beispiel sei ein Gehweg bzw. ein Teil eines Gehwegs genannt, der die Fläche umfasst, innerhalb der ein oder mehrere Objekte erfasst werden sollen. An diesen Gehweg bzw. diesen Teil des Gehwegs kann sich unmittelbar z. B. eine Begrünung (z. B. ein Gebüsch, Strauch, Wiese, um nur einige nicht-limitierende Beispiele zu nennen) anschließen, bei der es beispielsweise uninteressant sein kann, ob sich ein oder mehrere Objekte dort aufhalten, und daher erfasst werden könnten.

Die Projektionsinformation ist indikativ für eine visuell und/oder auditiv wiedergebbare Information. Bei einer derartigen visuell und/oder auditiv wiedergebbaren Information handelt es sich beispielsweise um eine visuell repräsentierbare Information, z. B. in Form von einem Bild, einer Grafik, einem Video, einem Clip, oder dergleichen, die insbesondere derart wiedergebbar (z. B. darstellbar) ist, dass das Objekt (bzw. der mit dem Objekt assoziierte Nutzer) Kenntnis von dieser Wiedergabe nehmen kann. Bei einer audiovisuell (d.h. visuell und auditiv) wiedergebbaren Information handelt es sich beispielsweise um eine zuvor beschriebene visuell wiedergebbare Information, die zusätzlich ein oder mehrere akustische Elemente aufweist, wobei das Objekt (bzw. der mit dem Objekt assoziierte Nutzer) bei dessen bzw. deren Wiedergabe dieses bzw. diese ebenfalls akustisch wahrnehmen (z. B. hören) kann.

Ferner ist es beispielsweise möglich, die Bewegung von erkannten Objekten zu verfolgen. Optional ist es möglich, beispielsweise innerhalb eines Radius, z. B. um einen Lichtmast, eine oder mehrere Grafiken oder dergleichen als Informationen zur Kenntnisnahme durch das Objekt darzustellen, d.h. wieder zu geben.

Die Projektionsinformation umfasst beispielsweise dynamische visuelle und/oder auditiv wiedergegebene Informationen in Form einer über die Zeit veränderlichen Darstellung, z. B. ein Video, einen Clip, oder dergleichen, um nur einige nicht-limitierende Beispiele zu nennen. Bei einer derartigen dynamischen Projektionsinformation kann es sich ferner auch um eine Darstellung handeln, die über die Zeit ihren Projektionsort innerhalb der Fläche verändert, und/oder die in ihrer Form, Größe, oder dergleichen veränderbar ist.

Die Regelinformation ist indikativ dafür, wie die visuell und/oder auditiv wiedergebbare Information zur Kenntnisnahme durch das Objekt wiedergegeben werden soll. Die Regelinformation kann beispielsweise durch eine Programmlogik abgebildet sein. Beispielsweise repräsentiert die Regelinformation, ob überhaupt eine Wiedergabe der Projektionsinformation erfolgen soll oder nicht. Ferner kann die Regelinformation beispielsweise repräsentieren, ob die Projektionsinformation beispielsweise in Abhängigkeit einer Zeit und/oder eines Datums, oder für eine bestimmte Zeitspanne wiedergegeben werden soll, um nur einige nicht-limitierende Beispiele zu nennen. Die Regelinformation kann beispielsweise ferner repräsentieren, dass die Wiedergabe der Projektionsinformation in Abhängigkeit von einem oder mehreren Parametern, die mit dem Objekt verknüpft bzw. assoziiert sind, erfolgen soll. Beispielsweise kann die Regelinformation repräsentieren, dass die Projektionsinformation nur wiedergegeben wird, wenn das Objekt bestimmte Kriterien erfüllt, beispielsweise ein Objekt einer bestimmten Klasse bzw. Kategorie ist. Als Beispiel sei an dieser Stelle genannt, dass die Projektionsinformation gemäß einer Ausgestaltung in Abhängigkeit der Regelinformation nur wiedergegeben wird, wenn es sich bei dem Objekt beispielsweise um einen Fußgänger handelt.

Es erfolgt beispielsweise nach dem Bestimmen der Projektionsinformation dessen Ausgabe bzw. dessen Ausgabe wird veranlasst. Die Projektionsinformation wird an einen weiteren Smartpole ausgegeben**,** der von dem zumindest einen Smartpole verschieden ist. Beispielsweise kann es sich bei diesem weiteren Smartpole um einen Smartpole handeln, der Mittel zur Ausgabe (z. B. Wiedergabe) der Projektionsinformation aufweist oder umfasst. Alternativ oder zusätzlich kann die Projektionsinformation an Mittel zur Ausgabe (z. B. Wiedergabe) der Projektionsinformation ausgegeben werden bzw. deren Ausgabe kann entsprechend veranlasst werden. Es versteht sich, dass diese Mittel zur Wiedergabe der Projektionsinformation beispielsweise von dem zumindest einen Smartpole umfasst sein können, oder mit dem zumindest einen Smartpole (z. B. elektrisch) verbindbar sind. Die Ausgabe der Projektionsinformation kann beispielsweise über eine Kommunikationsverbindung erfolgen. Eine derartige Kommunikationsverbindung ist beispielsweise drahtlos (z. B. gemäß dem Wireless Local Area Network (WLAN), Bluetooth (BT), BT Low Energy (BLE), Long Range Wide Area Network (LoRaWAN) Standard ausgebildet, oder gemäß einem Mobilfunkstandard (z. B: Global System for Mobile Communication (GSM), Universal Mobile Telecommunications System (UMTS); Long Term Evolution (LTE), New Radio (NR), um nur einige nicht-limitierende Beispiele zu nennen) ausgebildet. Alternativ oder zusätzlich ist eine derartige Kommunikationsverbindung eine drahtgebundene Kommunikationsverbindung, z. B. gemäß Local Area Network (LAN), direct LAN (DLAN), Powerline Communication (PLC) Spezifikationen, um nur einige nicht-limitierende Beispiele zu nennen.

Beispielhafte Ausgestaltungen der Erfindungen können bei einem oder mehreren der folgenden Szenarien Anwendung finden:
- Marktstände (z. B. Hinweise für Aufbaugrenzen projizieren);
- Bebauungsgrenzen (z. B. für Hausbau, -erweiterungen, -Straßenbau, etc.);
- Verkehrsregeln (Verbote bzw. Verkehrsregeln, z. B. in Abhängigkeit von Objektklasse bzw. -kategorie (z. B. Parkverbote für Autos) projizieren); und/oder
- Navigationshinweise (z. B. Kommunikation zwischen zwei Nutzern, Projektion jeweils des Weges zum anderen Nutzer**).**

Gemäß einer beispielhaften Ausführungsform nach allen Aspekten der Erfindung ist der zumindest eine Smartpole dazu ausgebildet oder konfiguriert, eine oder mehrere rein akustische Signale, z. B. basierend auf einer Audioinformation, auszugeben (z. B. über einen umfassten oder mit dem Smartpole verbindbaren Lautsprecher) bzw. dessen Ausgabe zu veranlassen (z. B. ein Steuersignal zu generieren bzw. auszugegeben, so dass eine von dem zumindest einen Smartpole das eine oder die mehreren akustischen Signale ausgibt.

Gemäß einer Ausführungsform nach allen Aspekten der Erfindung wird zumindest ein Teil der Projektionsinformation an zumindest einen weiteren Smartpole ausgegeben bzw. deren Ausgabe wird veranlasst, so dass dieser weitere Smartpole zumindest den Teil der Projektionsinformation wiederrum ausgeben bzw. deren Ausgabe veranlassen kann.

Der weitere Smartpole ist beispielsweise analog zu dem zumindest einen Smartpole ausgebildet bzw. umfasst gleichwirkende Mittel zur Durchführung des Verfahrens nach dem ersten Aspekt der Erfindung.

Für den Fall, dass der zumindest eine Smartpole ein an einer Straßenbeleuchtung nachrüstbares Modul ist, ist der weitere Smartpole beispielsweise ebenfalls ein an einer weiteren Straßenbeleuchtung nachrüstbares Modul. Die Projektionsinformation repräsentiert beispielsweise, um eine beispielhafte Anwendung gemäß dieser beispielhaften Ausführungsform der Erfindung aufzuzeigen, einen oder mehrere Navigationshinweise für einen Nutzer, wie z. B. einen Fußgänger. Der zumindest eine (erste) Smartpole kann beispielsweise zumindest einen Teil der Projektionsinformation wiedergeben (z. B. auf den Gehweg projizieren), um dem Nutzer einen ersten Navigationshinweis (z. B. einen ersten Richtungspfeil und/oder eine erste Distanzinformation) auszugegeben. Anschließend wird die Projektionsinformation an den weiteren (zweiten) Smartpole ausgegeben (z. B. übertragen, z. B. über ein Kommunikationsnetz). Dieser weitere Smartpole ist beispielsweise in einem Abstand von dem zumindest einen Smartpole angeordnet, wobei der Abstand in etwa der gemäß dem Teil der Projektionsinformation beispielsweise ausgegebenen Distanzinformation entspricht. Der weitere Smartpole gibt nun beispielsweise einen zweiten Navigationshinweis dem Nutzer aus (z. B. einen zweiten Richtungspfeil und/oder eine zweite Distanzinformation), um das Objekt (z. B. Nutzer) zu seinem intendierten Ziel zu leiten. Es versteht sich, dass die Projektionsinformation an eine Vielzahl von derartigen Smartpoles, die zur Durchführung des Verfahren nach dem ersten Aspekt der Erfindung ausgebildet sind, ausgegeben werden kann, um den Nutzer gemäß dem Beispielfall zu seinem intendierten Ziel zu navigieren.

Gemäß einer beispielhaften Ausführungsform nach allen Aspekten der Erfindung wird zumindest der Teil der Projektionsinformation über eine drahtlose und/oder drahtgebundene Kommunikationsverbindung an den weiteren Smartpole übermittelt.

Der zumindest eine Smartpole, sowie der weitere Smartpole, umfassen beispielsweise ferner eine oder mehrere Kommunikationsschnittstellen. Unter einer derartigen Kommunikationsschnittstelle soll beispielsweise eine drahtlose Kommunikationsschnittstelle und/oder eine drahtgebundene Kommunikationsschnittstelle verstanden werden.

Eine drahtlose Kommunikationsschnittstelle ist beispielsweise eine Kommunikationsschnittstelle gemäß einer drahtlosen Kommunikationstechnik. Ein Beispiel für eine drahtlose Kommunikationstechnik ist eine lokale Funknetztechnik wie Near Field Communication (NFC) und/oder Bluetooth (z.B. Bluetooth oder Bluetooth Low Energy) und/oder Wireless Local Area Network (WLAN) und/oder Long Range Wide Area Network (LoRaWAN). Ein weiteres Beispiel für eine drahtlose Kommunikationstechnik ist eine überörtliche Funknetztechnik wie beispielsweise eine Mobilfunktechnik, zum Beispiel GSM und/oder UMTS und/oder LTE. Die GSM-, UMTS- und LTE-Spezifikationen werden von dem 3rd Generation Partnership Project (3GPP) gepflegt und entwickelt.

Eine drahtgebundene Kommunikationsschnittstelle ist beispielsweise eine Kommunikationsschnittstelle gemäß einer drahtgebundenen Kommunikationstechnik. Beispiele für eine drahtgebundene Kommunikationstechnik sind ein LAN und/oder ein Bus-System, zum Beispiel ein Controller-Area-Network-Bus (CAN-Bus) und/oder ein universeller serieller Bus (USB) und/oder PLC. CAN-Bus ist beispielsweise gemäß dem ISO-Standard ISO 11898 spezifiziert. LAN ist zum Beispiel in den Standards der IEEE-802.3-Familie spezifiziert.

Eine derartige Kommunikationsschnittstelle ermöglicht eine Kommunikation zwischen zumindest zwei Smartpoles (z. B. zwei jeweils an einer Straßenbeleuchtung anordenbare Module), sofern jede der zumindest zwei Smartpoles eine Kommunikationsschnittstelle aufweist bzw. umfasst. Eine Kommunikationsverbindung zwischen den zumindest zwei Smartpoles kann beispielsweise verschlüsselt sein, z. B. mittels einer Ende-zu-Ende Verschlüsselung, um nur ein nicht-limitierendes Beispiel zu nennen.

Gemäß einer beispielhaften Ausführungsform nach allen Aspekten der Erfindung wird die Projektionsinformation mittels zumindest einer Projektionsvorrichtung, insbesondere eine Laserprojektionsvorrichtung, wiedergegeben.

Die Projektionsvorrichtung ermöglicht es beispielsweise, zumindest die visuell wiedergebbare Information derart darzustellen, so dass sie durch das erfasste Objekt wahrnehmbar ist. Dies kann beispielsweise mittels einer Laserprojektionsvorrichtung durchgeführt werden.

Unter einer Laserprojektionsvorrichtung wird insbesondere eine Projektionsvorrichtung verstanden, die beispielsweise einen (z.B. stetig) verändernden Laserpunkt oder eine Vektorgrafik projiziert, so dass eine visuell wiedergebbare Information mittels des Laserpunktes darstellbar ist. Eine derartige Vektorgrafik ist insbesondere eine komplexere Grafik mit mehreren Elementen, die jeweils wiederrum farbig sein können. Eine derartige Vektrografik ist in ihrer Größe frei skalierbar, so dass die Darstellung der Grafik in unterschiedlichen Größen (Ausmaßen) nicht zu Qualitätseinbußen in deren Darstellung führt. Ein Nutzer kann diesen dann beispielsweise optisch wahrzunehmen, z. B. als vollständiges Bild oder als Clip bzw. kurze Filmsequenz oder als Bewegtbild. Die Laserprojektionsvorrichtung umfasst beispielsweise eine oder mehrere Laserquellen, Spiegel zur Auslenkung der durch die eine oder mehreren Laserquellen erzeugten Laserpunkte, und mitunter andere (z. B. elektronische) Komponenten. Für den Fall, dass eine derartige Laserprojektionsvorrichtung nur eine einzelne Laserquelle (einer bestimmten, festgelegten Farbe) umfasst, kann mittels der Laserprojektionsvorrichtung die gemäß der Laserquelle ausgegebene Farbe dargestellt werden. Eine derartige Laserprojektionsvorrichtung kann beispielsweise ferner mehrere Laserquellen (z. B. RGB rot, grün, blau) zur Vollfarbprojektion aufweisen bzw. umfassen. Die Projektionsinformation repräsentiert beispielsweise eine Vektorgrafik, so dass bei Wiedergabe durch die Laserprojektionsvorrichtung diese visuell wiedergebbare Information beispielsweise frei skalierbar ist. Insbesondere in hellen Umgebungen, z. B. Tageslichtszenarien eignet sich eine derartige Laserprojektionsvorrichtung, da die visuell wiedergebbaren Informationen dann eine erhöhte Sichtbarkeit für einen oder mehrere Nutzer (z. B. mit dem erfassten Objekt assoziierte Menschen) bieten.

Gemäß einer Ausführungsform nach allen Aspekten der Erfindung werden zumindest ein erster Teil der Projektionsinformation durch eine erste Projektionsvorrichtung und zumindest ein zweiter Teil der Projektionsinformation durch eine zweite Projektionsvorrichtung wiedergegeben.

Gemäß einer beispielhaften Ausführungsform nach allen Aspekten der Erfindung ist die zumindest eine Projektionsvorrichtung oder die erste Projektionsvorrichtung von dem zumindest einen Smartpole umfasst.

Für den Fall, dass zumindest ein Teil der Projektionsinformation an zumindest einen weiteren Smartpole ausgegeben bzw. deren Ausgabe veranlasst wird, so dass dieser weitere Smartpole diese zumindest den Teil der Projektionsinformation wiederrum ausgeben bzw. deren Ausgabe veranlassen kann, umfasst der zumindest eine Smartpole, der zur Durchführung des Verfahrens nach dem ersten Aspekt ausgebildet ist, die erste Projektionsvorrichtung. Für den Fall, dass zumindest ein Teil der Projektionsinformation nicht an einen weiteren Smartpole ausgegeben werden soll, umfasst der zumindest eine Smartpole die Projektionsvorrichtung. Es versteht sich, dass es sich gemäß den Begriffen "Projektionsvorrichtung" und "erste Projektionsvorrichtung" um gleiche Projektionsvorrichtungen handeln kann. Eine Unterscheidung wurde vorliegend eingeführt, um den Fall, dass zumindest ein Teil der Projektionsinformation an einen weiteren Smartpole, der z. B. ebenfalls zur Durchführung des Verfahrens nach dem ersten Aspekt der Erfindung ausgebildet ist, ausgegeben wird bzw. werden soll, abgrenzen zu können.

Wie bereits zuvor ausgeführt, ist ein weiterer Smartpole beispielsweise analog zu dem zumindest einen Smartpole ausgebildet bzw. umfasst gleichwirkende Mittel zur Durchführung des Verfahrens nach dem ersten Aspekt der Erfindung. Entsprechend umfasst der zumindest eine Smartpole beispielsweise die erste Projektionsvorrichtung. Der weitere Smartpole umfasst beispielsweise die zweite Projektionsvorrichtung. Es versteht sich, dass derart eine Vielzahl von Smartpoles von einem System umfasst sein kann, wobei jede der Vielzahl (mindestens zwei Smartpoles) des Smartpoles jeweils Mittel zur Durchführung des Verfahrens nach dem ersten Aspekt der Erfindung aufweist. Derart kann beispielsweise ein Verbund von mehreren Smartpoles realisiert werden. Jede der Vielzahl von Smartpoles ist beispielsweise an verschiedenen, und optional stetig aufeinander folgenden Orten angeordnet (z. B. der Reihe nach an einer Straße). Dies ermöglicht beispielsweise die Projektion von einer "Geschichte" (z. B. Werbeaussagen oder dergleichen, um nur ein nicht-limitierendes Beispiel zu nennen), wobei jeweils eine der Vielzahl der Smartpoles einen Abschnitt bzw. Teil der "Geschichte" z. B. an einen Nutzer als Objekt projiziert. Um die komplette "Geschichte" z. B. wahrnehmen zu können, läuft der Nutzer beispielsweise an jeder der Vielzahl der Smartpoles vorbei, indem er beispielsweise die Straße entlang geht.

Ein derartiges Zusammenspiel von der Vielzahl, z. B. zwei oder mehr Smartpoles erlaubt es, dass die Projektionsinformation beispielsweise in jeder Fläche, die von jedem Smartpole zur Darstellung bzw. Projektion von Informationen genutzt werden kann, wiedergegeben werden kann. Die Projektionsinformation muss dabei nicht zwingend innerhalb der Fläche von beispielsweise benachbarten Smartpoles wiedergegeben werden. Für den Fall, dass mehr als zwei Smartpoles verfügbar sind, kann auf einer beliebigen Auswahl der Smartpoles die Projektionsinformation beispielsweise wiedergegeben werden.

Gemäß einer beispielhaften Ausführungsform nach allen Aspekten der Erfindung ist die Projektionsinformation indikativ für eine oder mehrere der folgenden objektabhängigen Informationen:
- Navigationsinformation;
- Ortsbezogene Information; und
- Objektbezogene Information.

Die objektabhängigen Informationen sind beispielsweise indikativ für nutzerindividuelle Informationen, die für einen oder mehrere spezifische Nutzer (die z. B. mit dem erfassten Objekt assoziiert sind, oder das erfasste Objekt repräsentieren) von Relevanz sind (z. B. Navigationsinformation indikativ für Anweisungen, um ein definiertes (Routen-) Ziel eines bzw. des Nutzers zu erreichen).

Die ortsbezogene Information ist indikativ für eine Information, die spezifisch an den Ort bzw. die Lokation, an der die Projektionsinformation visuell und/oder auditiv wiedergegeben werden kann, gebunden ist. Als Beispiel für eine derartige ortsbezogene Information sei eine Verkehrsinformation (z. B: Parkhinweis, Parkverbot, Wegweiser (z. B. Distanz und Richtung bis zum Stadtzentrum), um nur einige nicht-limitierende Beispiele zu nennen), genannt.

Die objektbezogene Information ist beispielsweise indikativ für eine Information, die in Abhängigkeit des erfassten (und optional klassifizierten) Objekts wiedergegeben werden kann. Beispielsweise kann an demselben Ort, einem ersten Objekt, z. B. einem Fußgänger, eine erste Projektionsinformation wiedergegeben werden, während an diesem Ort einem zweiten Objekt, z. B. einem Fahrradfahrer, eine zweite Projektionsinformation wiedergegeben wird. Der Hintergrund ist, dass mitunter eine Projektionsinformation zwar für einen Fußgänger relevant sein kann, nicht jedoch für einen Fahrradfahrer oder einen Autofahrer, um nur ein nicht-limitierendes Beispiel zu nennen.

Welche der objektabhängigen Informationen von der Projektionsinformation umfasst sind, oder auf welchen zumindest teilweise basierend die Projektionsinformation bestimmt wird, kann beispielsweise durch die Regelinformation festgelegt sein.

Gemäß einer beispielhaften Ausführungsform nach allen Aspekten der Erfindung ist die Projektionsinformation indikativ für eine oder mehrere der folgenden objektunabhängigen Informationen:
- Zeit- und/oder Ortsinformation;
- Werbeinformation;
- Verkehrsaufkommen; und
- Menschenmenge.

Die objektunabhängigen Informationen sind beispielsweise indikativ für Informationen, die für jeden Nutzer (die z. B. mit dem erfassten Objekt assoziiert sind, oder das erfasste Objekt repräsentieren) von Relevanz sein können, wie z. B. Werbeinformationen, Zeit- und/oder Ortsinformation, Verkehrsaufkommen, und/oder Menschenmenge (z. B. verursacht durch eine Veranstaltung und auf die der Nutzer treffen kann für den Fall, dass dieser sich in eine bestimmte Richtung fortbewegt), um nur einige nicht-limitierende Beispiele zu nennen.

Welche der objektunabhängigen Informationen von der Projektionsinformation umfasst sind, oder auf welchen zumindest teilweise basierend die Projektionsinformation bestimmt wird, kann beispielsweise durch die Regelinformation festgelegt sein.

Gemäß einer beispielhaften Ausführungsform nach allen Aspekten der Erfindung umfasst das Erfassen des Objektes ferner:
- Klassifizieren des Objektes; und/oder
- Bestimmen einer Bewegungsinformation indikativ für eine Bewegungsrichtung, Bewegungsgeschwindigkeit und/oder Orientierung des Objekts innerhalb des Erfassungsradius.

Das Klassifizieren des Objektes umfasst beispielsweise ein Interpretieren der von dem zumindest einen Sensor erfassten (z. B. gemessenen) Informationen (z. B. Sensorwerte), wobei zumindest teilweise auf deren Basis eine Klassifizierung von Objekt -Position, -Typ und -Bewegung durchgeführt werden kann.

Nach dem Erfassen des Objekts kann dieses beispielsweise klassifiziert werden. Das Klassifizieren umfasst beispielsweise, ob es sich bei dem Objekt um ein Auto, einen Fußgänger, ein Fahrrad bzw. Fahrradfahrer, ein Skateboard bzw. Skateboardfahrer, Inlineskatefahrer, Hoverboard bzw. Hoverboardfahrer, oder dergleichen handelt, um nur einige nicht-limitierende Beispiele zu nennen. Ein derartiges Klassifizieren des Objekts kann beispielsweise mittels eines künstlichen neuronalen Netzes durchgeführt werden.

Beispielsweise kann eine Objektinformation indikativ für das erfasste Objekt und optional eine oder mehrere weitere Informationen (z. B. Regelinformation) an einen Server kommuniziert (z. B. übermittelt) werden, der ein künstliches neuronales Netz umfasst oder mit diesem verbunden ist. Das Klassifizieren des Objekts kann anschließend beispielsweise mittels des künstlichen neuronalen Netzes durchgeführt werden. Ferner kann beispielsweise das Ergebnis des Klassifizierens an die zumindest eine Vorrichtung kommuniziert werden.

Das künstliche neuronale Netz kann ferner beispielsweise nach der Art eines sogenannten Generative Adversarial Networks (GAN; auf deutsch: gegnerische erzeugende Netze) ausgebildet sein. Ein derartiges GAN umfasst dabei beispielsweise mindestens zwei künstliche neuronale Netze, die derart gegeneinander antreten, dass deren Ergebnisse miteinander verglichen werden. So kann auf die Qualität des durch das künstliche neuronale Netz ermittelten Ergebnisses geschlossen werden. Beispielsweise arbeitet ein erstes künstliches neuronales Netz des GAN mit Daten, die es z. B. aus den laufenden Messungen (z. B. Erfassen oder Erhalten der Objektinformation und optional der Regelinformation) erhält und erzeugt eine Aussage (z. B. mittels eines entsprechenden Generators) über das Ergebnis (z. B. das klassifizierte Objekt). Das zweite künstliche neuronale Netz des GAN (auch als Diskriminator bezeichnet) kann beispielsweise nun diese Aussage mit einem idealen, vorgegebenen Ergebnis oder einem idealen antrainierten Ergebnis vergleichen. Wenn das zweite künstliche neuronale Netz keinen oder einen nur noch geringen Unterschied zur Aussage des ersten künstlichen neuronalen Netzes bestimmt, ist beispielsweise ein optimales Ergebnis erreicht. Derart kann das Klassifizieren (oder auch das Bestimmen der Projektionsinformation) mittels eines derartigen als GAN ausgebildeten künstlichen neuronalen Netzes signifikant verbessert werden.

Das künstliche neuronale Netz umfasst beispielsweise einen Auswertealgorithmus, so dass beispielsweise aus Trainingsfällen als Beispiele gelernt werden kann und diese nach Beendigung der Lernphase als Basis verallgemeinert werden können, z. B. um ein Ergebnis (z. B. das klassifizierte Objekt) zu bestimmen. Das heißt, es werden nicht einfach Beispiele auswendig gelernt, sondern es werden Muster und Gesetzmäßigkeiten in den Lerndaten erkannt. Hierzu können unterschiedliche Ansätze verfolgt werden. Beispielsweise kann ein überwachtes Lernen, ein teilüberwachtes Lernen, ein unüberwachtes Lernen, ein bestärktes Lernen und/oder ein aktives Lernen eingesetzt werden. Ein überwachtes Lernen kann beispielsweise mittels eines künstlichen neuronalen Netzes (etwa einem rekurrenten neuronalen Netz) oder mittels einer Support Vector Machine erfolgen. Auch ein unüberwachtes Lernen kann beispielsweise mittels eines künstlichen neuronales Netzes erfolgen. Als Lerndaten dienen dann beispielsweise insbesondere mehrmalig erhaltene Objektinformationen und optionale Regelinformationen und/oder die nach einem Durchlauf bestimmten Ergebnisse (z. B. klassifizierte Objekte) des künstlichen neuronalen Netzes.

Gemäß einer beispielhaften Ausführungsform nach allen Aspekten der Erfindung wird das Objekt in zumindest eine der folgenden Klassen klassifiziert:
- Fußgänger;
- Kraftfahrzeug (z. B. Auto, LKW, etc.);
- Zweirad (z. B. Fahrrad, Roller, Motorrad, etc.); und
- mobiles Sportgerät (z. B. Skateboard, Inlineskates, etc.).

Alternativ oder zusätzlich umfasst eine beispielhafte Ausführungsform nach allen Aspekten ferner das Bestimmen einer Bewegungsinformation. Die Bewegungsinformation umfasst oder repräsentiert beispielsweise eine Bewegungsrichtung, Bewegungsgeschwindigkeit und/oder eine Orientierung des Objekts innerhalb der Fläche. Beispielsweise kann die Bewegungsinformation umfassen oder repräsentieren, ob sich das Objekt relativ schnell (z. B. ein fahrendes Auto) im Vergleich zu einem relativ langsamen Objekt (z. B. ein Fußgänger) innerhalb der Fläche bewegt oder nicht. Auch die Bewegungsinformation kann beispielsweise nach vorstehend beschriebener Art seitens eines künstlichen neuronalen Netzes bestimmt werden, und/oder zum Klassifizieren des Objekts verwendet werden. Gemäß einer beispielhaften Ausführungsform nach allen Aspekten der Erfindung wird die Projektionsinformation ferner basierend auf dem klassifizierten Objekt und/oder der bestimmten Bewegungsinformation bestimmt.

Beispielsweise kann es je nach klassifiziertem Objekt erforderlich sein, die Projektionsinformation zu adaptieren, so dass diese optimiert von dem Objekt zur Kenntnis genommen werden kann. Beispielsweise kann einem sich langsam bewegenden Objekt eine von der Projektionsinformation repräsentierte Darstellung kleinere Ausmaße aufweisen, da das Objekt hinreichend lange sich innerhalb der Fläche aufhält. Bewegt sich hingegen das Objekt schneller, kann die von der Projektionsinformation repräsentierte Darstellung beispielsweise größere Ausmaße aufweisen, so dass die Darstellung leichter von dem Objekt bzw. dem mit dem Objekt assoziierten Menschen bzw. Nutzer erfasst bzw. zur Kenntnis genommen werden kann.

Darüber hinaus kann die Projektion dem Objekt folgen. Die Darstellung der Projektionsinformation kann also ihre absolute Position, d.h. ihre Projektionsfläche, während der Darstellung verändern. Als Beispiel sei an dieser Stelle die Fahrradnavigation erwähnt. Hierbei wird z. B. einen Meter vor dem Fahrrad ein Navigationspfeil projiziert, wobei der Navigationspfeil der Bewegung des Fahrrads folgt, so dass der Pfeil - soweit möglich - stets etwa einen Meter vor dem Fahrrad dargestellt wird, wobei sich das Fahrrad relativ zu dem zumindest einen Smartpole bewegt.

Gemäß einer Ausführungsform nach allen Aspekten der Erfindung erfolgt das Erfassen des Objekts mittels zumindest einer Sensortechnik.

Ferner kann beispielsweise basierend auf von der zumindest einen Sensortechnik erfassten Informationen ein Klassifizieren des Objekts, und/oder ein Bestimmen einer Bewegung des Objekts (z. B. Richtung, Geschwindigkeit, Orientierung) erfolgen, um nur einige nicht-limitierende Beispiele zu nennen.

Die zumindest eine Sensortechnik ist beispielsweise nach der Art eines Light Detection And Ranging (LIDAR) Systems ausgebildet. Eine derartige LIDAR-Sensortechnik emittiert beispielsweise Laserimpulse und ermittelt (z. B. detektiert) das zurückgestreute Licht. Anschließend kann basierend auf der Signal- bzw. Lichtlaufzeit der Signale eine Entfernung zum Ort der Streuung bestimmt (z. B. berechnet) werden. Es versteht sich, dass alternativ oder zusätzlich weitere Sensortechniken zum Einsatz kommen können.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1:: eine schematische Darstellung einer beispielhaften Ausführungsform eines Systems gemäß der vorliegenden Erfindung,
- Fig. 2a:: ein Flussdiagramm einer beispielhaften Ausführungsform eines Verfahrens, das im Kontext der vorliegenden Erfindung beispielsweise von der Vorrichtung 130-1 des Systems der Fig. 1 ausgeführt werden kann;
- Fig. 2b:: ein Flussdiagramm einer beispielhaften Ausführungsform eines Verfahrens, das im Kontext der vorliegenden Erfindung beispielsweise von dem Modul 130-2 des Systems der Fig. 1 ausgeführt werden kann; und
- Fig. 3:: eine schematische Darstellung einer beispielhaften Ausführungsform einer Vorrichtung gemäß der vorliegenden Erfindung.

### Detaillierte Beschreibung einiger beispielhafter Ausführungsformen der Erfindung

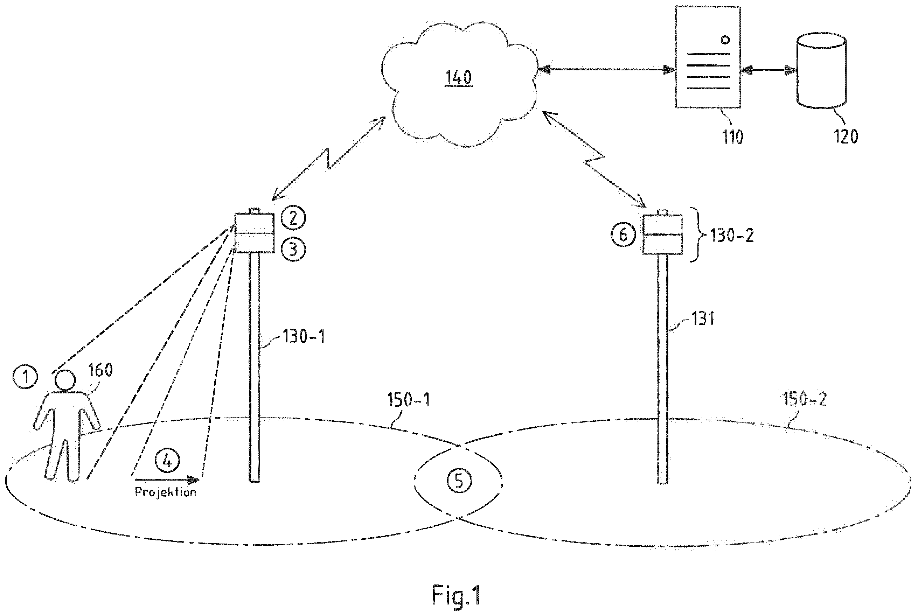

Fig. 1 ist eine schematische Darstellung einer beispielhaften Ausführungsform eines Systems 100 gemäß der vorliegenden Erfindung. Das System 100 umfasst vorliegend zwei Vorrichtungen 130-1, 130-2 gemäß dem zweiten Aspekt der Erfindung. Das System 100 umfasst einen optionalen Server 110 und eine optionale Datenbank 120. Das System 100 umfasst zumindest ein Kommunikationsnetz 140 (z. B. das Internet, Mobilfunknetz, oder ein WLAN-Netz, um nur einige nicht-limitierende Beispiele zu nennen). Alternativ oder zusätzlich kann das Kommunikationsnetz eine drahtgebundene Kommunikationsverbindung, z. B. gemäß dem DLAN-Standard, bereitstellen.

Es versteht sich, dass das System 100 eine Vielzahl (mindestens zwei Vorrichtungen) von Vorrichtungen umfassen kann. In Fig. 1 sind vorliegend lediglich zwei Vorrichtungen 130-1 und 130-2 dargestellt zum Verdeutlichen des Funktionsprinzips. Vorrichtung 130-1 ist ein Smartpole. Vorrichtung 130-2 ist ein nachrüstbares Modul, dass vorliegend an einem konventionellen Lichtmast 131 bzw. an einer konventionellen Straßenbeleuchtung angeordnet (z. B. montiert und/oder installiert) ist.

Über das Kommunikationsnetz können die Vorrichtungen 130-1 und 130-2 miteinander kommunizieren. Alternativ oder zusätzlich kann zumindest eine der Vorrichtungen 130-1 oder 130-2 über das Kommunikationsnetz 140 mit dem optionalen Server 110 kommunizieren. Für den Fall, dass nur eine der Vorrichtungen 130-1 oder 130-2 eine Kommunikationsverbindung zu dem optionalen Server 110 aufweist (z. B. eine drahtgebundene Kommunikationsverbindung), kann in beispielhaften Ausgestaltungen des Gegenstands dennoch die andere der Vorrichtungen 130-1 oder 130-2 mit dem optionalen Server 110 kommunizieren, indem diejenige Vorrichtung, die die Kommunikationsverbindung mit dem Server 110 aufweist, die entsprechenden Informationen zunächst an die andere Vorrichtung 130-1 oder 130-2 weiterleitet, zu der diese Vorrichtung 130-1 bzw. 130-2 eine Kommunikationsverbindung aufweist. Derart können eine oder mehrere Informationen nach der Art eines Daisy-Chain-Verfahrens an eine oder mehrere von dem System 100 umfasste Vorrichtungen 130 nach dem zweiten Aspekt der Erfindung übermittelt werden. Es versteht sich, dass nach vorstehend beschriebener Art eine beliebige Anzahl von Vorrichtungen 130 nach dem zweiten Aspekt der Erfindung untereinander als auch zu dem optionalen Server 110 Informationen übermitteln können. In diesen letzteren Fällen müssen nur jeweils mehrere Vorrichtungen 130 die Informationen jeweils an eine der nächsten Vorrichtungen 130 weiterleiten, bis die eine oder mehreren Informationen am Ziel angelangt sind.

Das System 100 ermöglicht es, beispielhafte Ausgestaltungen der vorliegenden Erfindung durchzuführen. Ein derartiges Beispiel ist anhand der in der Fig. 1 gekennzeichneten Schritte (Ziffern 1 bis 6 in Kreisen illustriert) nachstehend erläutert.

| | | |
|---|---|---|
| Schritt 1: | Objekt 160 tritt in Erfassungsradius 150-1 ein. | |
| Schritt 2: | Erfassung und Bestimmung Position, Typ und Bewegung. | |
| | Position: | Möglichst genaue Lokalisierung innerhalb des Erfassungsradius; |
| | Typ: | z. B. Fußgänger, Fahrradfahrer oder Auto; und |
| | Bewegung: | z. B. Geschwindigkeit und Bewegungsvektor. |
| Schritt 3: | Regelinformation bzw. Projektionsregeln werden geprüft: | |
| | Objektabhängig: | z. B. Objekt-Typ, -Position und -Bewegung; |
| | Objektunabhängig: | z. B. Uhrzeit, Verkehrsaufkommen, und/oder Menschenmenge; |
| | Interaktion mit Nutzer wird ermöglicht. | |
| Schritt 4: | Projektion wird ausgeführt, Bewegung des Objekts kann begleitet werden, auch mit mehreren Smartpoles möglich. | |
| Schritt 5: | optional tritt Objekt nun in Erfassungsradius 150-2 eines weiteren Smartpoles 130-2 ein. | |
| Schritt 6: | Weiterer Smartpole 130-2 erfasst (z. B. empfängt) Projektionsinformation und Projektion, sowie optional erfolgt weiteres Durchführen eines Verfahrens nach dem ersten Aspekt durch Smartpole 130-2 (z. B. Erfassen des Objekts, Bestimmen einer (neuen) Projektionsinformation, sowie Ausgabe der Projektionsinformation). | |

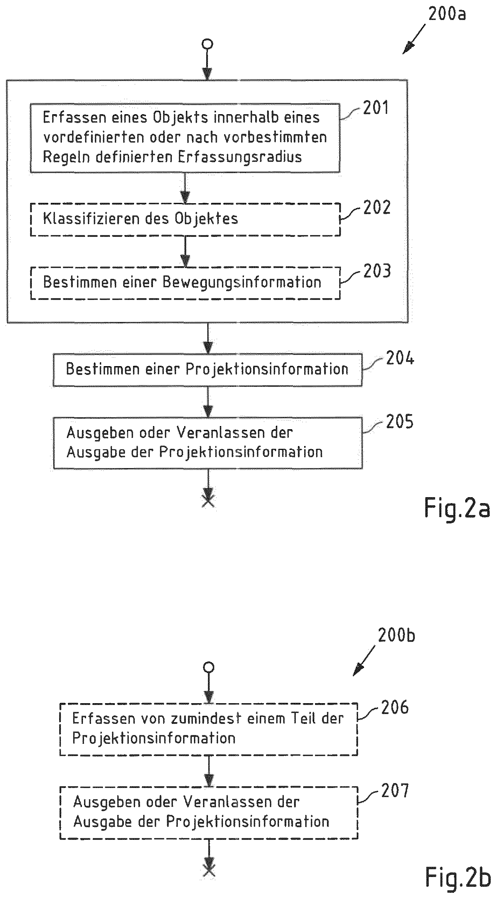

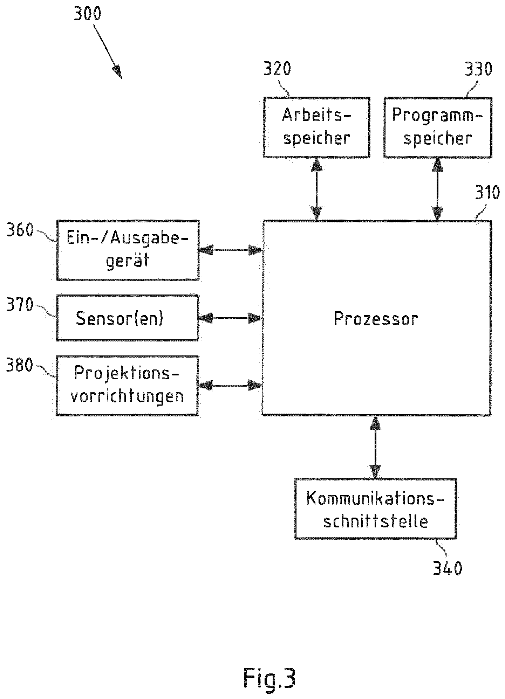

Fig. 2a stellt ein Flussdiagramm 200a einer beispielhaften Ausführungsform eines Verfahrens dar, das im Kontext der vorliegenden Erfindung ausgeführt werden kann. Das Flussdiagramm 200a wird beispielsweise von der Vorrichtung 130-1 oder 130-2 des Systems 100 der Fig. 1 ausgeführt, die beispielsweise jeweils als Vorrichtung 300 der Fig. 3 ausgebildet sein können. Einzelne Schritte des Flussdiagramms 200a können beispielsweise optional von dem Server 110 nach Fig. 1 im Zusammenspiel mit der jeweiligen Vorrichtung 130-1 bzw. 130-2 der Fig. 1 ausgeführt werden.

In einem ersten Schritt 201 erfolgt ein Erfassen eines Objekts innerhalb eines vordefinierten oder nach vorbestimmten Regeln definierten Erfassungsradius. Das Erfassen des Objekts erfolgt beispielsweise innerhalb des Erfassungsradius, der sich aus der Sensorreichweite (vgl. Sensor(en) 370 der Fig. 3) ergibt. Das Erfassen wird folglich beispielsweise von dem einen oder den mehreren Sensoren durchgeführt. Optional umfasst der Schritt 201 des Erfassens einen sich z. B. an das Erfassen anschließenden Schritt 202, in dem das erfasste Objekt klassifiziert wird. Zudem kann optional der Schritt 201 den Schritt 203 umfassen, der parallel zu dem Schritt 202, oder nach dem Erfassen des Objekts, aber vor oder nach dem Schritt 202 - falls dieser ausgeführt wird - ausgeführt wird. Das der Schritt 201 diese optionalen Schritte 202 und/oder 203 umfassen kann, ist durch den die Schritte 201 bis 203 umrandenden Kasten in Fig. 2a dargestellt.

Der Schritt des Erfassens kann beispielsweise seitens eines von der Vorrichtung 130-1 und/oder 130-2 umfassten Sensors durchgeführt werden. Die Schritte 202 sowie 203 können entweder von der jeweiligen Vorrichtung 130-1, 130-2, oder aber auch alternativ oder zusätzlich von dem optionalen Server 110 der Fig. 1 ausgeführt werden. Falls der Schritt 202 und/oder der Schritt 203 von dem Server 110 ausgeführt wird, werden vorher beispielsweise eine oder mehrere Objektinformationen, die indikativ für das in dem Schritt 201 erfasste Objekt sind, von der entsprechenden Vorrichtung 130-1, 130-2 an den Server 110 übermittelt, z. B. seitens der von der entsprechenden Vorrichtung 130-1, 130-2 umfassten Kommunikationsschnittstelle (vgl. Kommunikationsschnittstelle 340 der Fig. 3) über das Kommunikationsnetz 140 der Fig. 1 an den Server 110.

In dem Schritt 204 erfolgt ein Bestimmen einer Projektionsinformation, wobei das Bestimmen der Bewegungsinformation zumindest teilweise basierend auf den Ergebnisses des Schritts 201, sowie optional ferner basierend auf den Ergebnisses der Schritte 202 und/oder 203 ausgeführt wird. Das Bestimmen der Projektionsinformation kann gemäß der im Zusammenhang der Schritte 201 bis 203 beschriebenen Weise sowohl von der entsprechenden Vorrichtung 130-1, 130-2, als auch von dem Server 110 der Fig. 1 ausgeführt werden.

In dem Schritt 205 erfolgt ein Ausgeben oder Veranlassen der Ausgabe der Projektionsinformation. Hierbei kann die Projektionsinformation beispielsweise von einer von der Vorrichtung 130-1, 130-2 umfassten Projektionsvorrichtung (vgl. Projektionsvorrichtung 380 der Fig. 3) wiedergegeben bzw. dargestellt werden. Alternativ oder zusätzlich kann die Projektionsinformation ausgegeben werden bzw. deren Ausgabe kann veranlasst werden, z. B. über eine von der Vorrichtung 130-1, 130-2 umfasste Kommunikationsschnittstelle, wie bereits vorstehend ausgeführt wurde.

Fig. 2b stellt ein Flussdiagramm 200b einer beispielhaften Ausführungsform eines Verfahrens dar, das im Kontext der vorliegenden Erfindung ausgeführt werden kann. Das Verfahren wird beispielsweise von der Vorrichtung 130-1 oder 130-2 des Systems 100 der Fig. 1 ausgeführt, die beispielsweise jeweils als Vorrichtung 300 der Fig. 3 ausgebildet sein können. Einzelne Schritte des Flussdiagramms 200b können beispielsweise von einer der Vorrichtungen 130-1 bzw. 130-2 ausgeführt werden, wobei zuvor die jeweils andere dieser Vorrichtungen 130-1, 130-2 das Flussdiagramm 200a der Fig. 2a ausgeführt hat.

In dem optionalen Schritt 206 erfolgt ein Erfassen von zumindest einem Teil der Projektionsinformation. Hierbei handelt es sich beispielsweise um diejenige Projektionsinformation, die in dem Schritt 205 ausgegeben wurde bzw. deren Ausgabe veranlasst wurde. Die Projektionsinformation wird in dem Schritt 206 beispielsweise erfasst, indem diese empfangen wird, z. B. seitens einer vor der jeweiligen Vorrichtung 130-1, 130-2 umfassten Kommunikationsschnittstelle.

In dem optionalen Schritt 207 erfolgt ein Ausgeben oder Veranlassen der Ausgabe der Projektionsinformation. Hierbei handelt es sich beispielsweise um die in dem Schritt 206 erfasste (z. B. empfangene) Projektionsinformation. Die Projektionsinformation kann beispielsweise an eine weitere Vorrichtung 130 (in Fig. 1 nicht dargestellt) ausgegeben werden, nach der im Zusammenhang mit dem Schritt 205 beschriebenen Art und Weise. Es versteht sich, dass die Projektionsinformation in dem Schritt 207 auch zurück an diejenige Vorrichtung 130, die beispielsweise bereits das Flussdiagramm 200a ausgeführt hat, ausgegeben werden kann bzw. deren Ausgabe entsprechend veranlasst werden kann. Dies ist beispielsweise dann der Fall, wenn ein in einen Erfassungsradius der Vorrichtung, die das Flussdiagramm 200b ausführt, eingetretenes oder ein in dem Erfassungsradius erfasstes Objekt z. B. ermittelt aufgrund der Bewegungsinformation, zurück in den Erfassungsradius der Vorrichtung, die das Flussdiagramm 200a ausgeführt hat, eintritt oder in diesem erfasst wird. Anschließend kann diese Vorrichtung beispielsweise wiederrum das Flussdiagramm 200b der Fig. 2b ausführen.

Fig. 3 zeigt eine schematische Darstellung einer beispielhaften Ausführungsform einer Vorrichtung 300, die im Kontext der vorliegenden Erfindung eingesetzt werden kann.

Die Vorrichtung 300 kann beispielsweise die Vorrichtung 130-1 oder 130-2 der Fig. 1 repräsentieren (und dann beispielsweise das Verfahren des Flussdiagramms 200a der Fig. 2a und/oder das Verfahren 200b der Fig. 2b ausführen).

Vorrichtung 300 umfasst einen Prozessor 310 mit zugeordnetem Arbeitsspeicher 320 und Programmspeicher 330. Der Prozessor 310 führt beispielsweise Programmanweisungen aus, die im Programmspeicher 330 gespeichert sind. Die Programmanweisungen führen das Verfahren gemäß dem ersten Aspekt der Erfindung aus und/oder steuern dieses. Damit enthält der Programmspeicher 330 ein Computerprogramm nach dem fünften Aspekt der Erfindung und stellt ein Computerprogrammprodukt zu dessen Speicherung dar. Vorrichtung 300 stellt ein Beispiel einer Vorrichtung gemäß dem zweiten Aspekt der Erfindung dar.

Der Programmspeicher 330 kann beispielsweise ein persistenter Speicher, wie beispielsweise ein Read-Only-Memory (ROM)-Speicher sein. Der Programmspeicher 330 kann beispielsweise fest mit dem Prozessor 310 verbunden sein, kann aber alternativ auch lösbar mit dem Prozessor 310 verbunden sein, beispielsweise als Speicherkarte, Diskette oder optisches Datenträgermedium (z.B. eine CD oder DVD). In dem Programmspeicher 330, oder in einem separaten Speicher, können auch weitere Informationen abgespeichert sein.

Der Arbeitsspeicher 320 wird beispielsweise zur Speicherung temporärer Ergebnisse während der Abarbeitung der Programmanweisungen genutzt, es handelt sich hierbei beispiels-weise um einen flüchtigen Speicher, wie beispielsweise einen Random-Access-Memory (RAM)-Speicher.

Der Prozessor 310 ist ferner operativ mit einer Kommunikationsschnittstelle 340 verbunden, mit der beispielsweise ein Informationsaustausch mit anderen Vorrichtungen möglich ist (siehe die gestrichelten Pfeile in Fig. 1).

Die Vorrichtung 300 kann auch weitere Komponenten enthalten. Falls Vorrichtung 300 die Vorrichtung 130-1 oder 130-2 repräsentiert, ist insbesondere ein Erfassungsmittel zur Erfassung von zumindest einem Objekt vorhanden, das beispielsweise zur optischen Erfassung (z.B. in Form eines oder mehrerer (z. B. Lidar-) Sensoren 370 z. B. des Objekts 160 nach Fig. 1 eingerichtet ist und mit Prozessor 310 operativ verbunden ist.

Prozessor 310 steuert zudem die Kommunikationsschnittstelle 340, welche beispielsweise eine Netzwerkschnittstelle sein kann und als Netzwerkkarte, Netzwerkmodul und/oder Modem ausgebildet sein kann. Die Kommunikationsschnittstelle 340 ist insbesondere dazu eingerichtet, eine Verbindung der Vorrichtung 300 mit anderen Vorrichtungen (z. B. zumindest einer der Vorrichtungen 130-1, 130-2 und/oder Server 110 nach Fig. 1), insbesondere über ein (drahtloses) Kommunikationssystem, beispielsweise ein Netzwerk, herzustellen und mit diesen zu kommunizieren. Die Kommunikationsschnittstelle 340 kann beispielsweise Daten (über das Kommunikationssystem) empfangen und an Prozessor 310 weiterleiten und/oder Daten von Prozessor 310 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard und/oder Long Range Wide Area Network (LoRaWAN)), ein drahtgebundenes Netzwerk, ein Mobilfunknetzwerk, ein Telefonnetzwerk und/oder das Internet. Beispielsweise kann mittels der Kommunikationsschnittstelle 340 mit dem Internet und/oder anderen Vorrichtungen kommuniziert werden.

Über eine derartige Kommunikationsschnittstelle 340 können insbesondere eine oder mehrere Projektionsinformationen (vgl. Schritt 205 nach Fig. 2a, und/oder Schritt 206 der Fig. 2b) erhalten (z. B. empfangen) werden oder über diese an eine weitere Vorrichtung ausgegeben werden.

Des Weiteren kann Prozessor 310 zumindest ein optionales Ein-/Ausgabegerät 360 steuern. Ein-/Ausgabegerät 360 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 360 kann beispielsweise Eingaben eines Benutzers aufnehmen und an Prozessor 310 weiterleiten und/oder Informationen für den Benutzer von Prozessor 310 empfangen und ausgeben.

Schließlich kann die Vorrichtung 300 noch weitere Komponenten 370, 380 umfassen. Sensor(en) 370, z. B. ein oder mehrere LIDAR-Sensoren, können beispielsweise ein oder mehrere Objekte im Erfassungsradius der Vorrichtung 300 erfassen (vgl. Schritt 201 nach Fig. 2a).

Projektionsvorrichtung(en) 380 sind beispielsweise ein oder mehrere Projektoren, z. B. Laserprojektor und/oder Tageslichtprojektor, um nur einige nicht-limitierende Beispiele zu nennen, um eine bestimmte Projektionsinformation auszugeben (z. B. wiederzugeben bzw. darzustellen; vgl. auch Schritt 205 der Fig. 2a bzw. Schritt 207 der Fig. 2b).

## Patentansprüche

1. Verfahren, durchgeführt von zumindest einem Smartpole (130-1, 130-2, 300) als intelligente Straßenbeleuchtung, wobei der zumindest eine Smartpole (130-1, 130-2, 300) zumindest eine Sensortechnik (370), zumindest eine Projektionsvorrichtung (380) und eine Kommunikationsschnittstelle (340) aufweist, umfassend:
- Erfassen eines Objekts (160) mittels der zumindest einen Sensortechnik (370), innerhalb eines vordefinierten oder nach vorbestimmten Regeln definierten Erfassungsradius (150-1, 150-2), wobei der Erfassungsradius (150-1, 150-2) zumindest eine Fläche umfasst innerhalb der das Objekt (160) zumindest teilweise vorhanden ist;
- Bestimmen einer Projektionsinformation indikativ für zumindest eine visuell und/oder auditiv wiedergebbare Information, wobei die Projektionsinformation zumindest teilweise basierend auf dem erfassten Objekt (160) und einer Regelinformation bestimmt wird, wobei die Regelinformation indikativ dafür ist, ob eine Projektion zur Kenntnisnahme durch das Objekt (160) erfolgen soll oder nicht; und
- Ausgeben oder Veranlassen der Ausgabe der Projektionsinformation,
- wobei zumindest ein zweiter Teil der Projektionsinformation an zumindest einen weiteren Smartpole (130-1, 130-2, 300) mittels der Kommunikationsschnittstelle (340) ausgegeben bzw. deren Ausgabe veranlasst wird, so dass dieser weitere Smartpole (130-1, 130-2, 300) zumindest den zweiten Teil der Projektionsinformation wiederrum ausgeben bzw. deren Ausgabe veranlassen kann,
- wobei zumindest ein erster Teil der Projektionsinformation durch die zumindest eine Projektionsvorrichtung (380) und zumindest der zweiter Teil der Projektionsinformation durch eine zweite Projektionsvorrichtung des weiteren Smartpole (130-1, 130-2, 300) wiedergegeben werden.

2. Verfahren nach Anspruch 1, wobei zumindest der zweite Teil der Projektionsinformation über eine drahtlose und/oder drahtgebundene Kommunikationsverbindung an den weiteren Smartpole (130-1, 130-2, 300) übermittelt wird.

3. Verfahren nach einem der vorhergehenden Ansprüche, wobei die Projektionsvorrichtungen (380) des Smartpoles (130-1, 130-2, 300) und des weiteren Smartpoles (130-1, 130-2, 300) Laserprojektionsvorrichtungen sind.

4. Verfahren nach einem der vorhergehenden Ansprüche, wobei die Projektionsinformation indikativ für eine oder mehrere der folgenden objektabhängigen Informationen ist:
- Navigationsinformation;
- Ortsbezogene Information; und
- Objektbezogene Information.

5. Verfahren nach einem der vorhergehenden Ansprüche, wobei die Projektionsinformation indikativ für eine oder mehrere der folgenden objektunabhängigen Informationen ist:
- Zeit- und/oder Ortsinformation;
- Werbeinformation;
- Verkehrsaufkommen; und
- Menschenmenge.

6. Verfahren nach einem der vorhergehenden Ansprüche, wobei das Erfassen des Objektes (160) ferner umfasst:
- Klassifizieren des Objektes (160); und/oder
- Bestimmen einer Bewegungsinformation indikativ für eine Bewegungsrichtung, Bewegungsgeschwindigkeit und/oder Orientierung des Objekts (160) innerhalb des Erfassungsradius (150-1, 150-2) des Smartpoles (130-1, 130-2, 300).

7. Verfahren nach Anspruch 6, wobei die Projektionsinformation ferner basierend auf dem klassifizierten Objekt (160) und/oder der bestimmten Bewegungsinformation bestimmt wird.

8. Verfahren nach Anspruch 5 oder Anspruch 6, wobei das Objekt (160) in zumindest eine der folgenden Klassen klassifiziert wird:
- Fußgänger;
- Kraftfahrzeug;
- Zweirad; und
- mobiles Sportgerät.

9. Smartpole als intelligente Straßenbeleuchtung umfassend:
- zumindest eine Sensortechnik (370), die dazu konfiguriert ist, ein Objekt innerhalb eines vordefinierten oder nach vorbestimmten Regeln definierten Erfassungsradius (150-1, 150-2) zu erfassen, wobei der Erfassungsradius (150-1, 150-2) zumindest eine Fläche umfasst innerhalb der das Objekt (160) zumindest teilweise vorhanden ist;
- einen Prozessor (310), der dazu konfiguriert ist, eine Projektionsinformation indikativ für zumindest eine visuell und/oder auditiv wiedergebbare Information zu bestimmen, wobei die Projektionsinformation zumindest teilweise basierend auf dem erfassten Objekt (160) und einer Regelinformation bestimmt wird, wobei die Regelinformation indikativ dafür ist, ob eine Projektion zur Kenntnisnahme durch das Objekt (160) erfolgen soll oder nicht;
- eine Kommunikationsschnittstelle (340), die dazu konfiguriert ist, zumindest einen zweiten Teil der Projektionsinformation an zumindest einen weiteren Smartpole (130-1, 130-2, 300) auszugegeben bzw. deren Ausgabe zu veranlassen, so dass eine Projektionsvorrichtung (380) dieses weiteren Smartpole (130-1, 130-2, 300) zumindest den zweiten Teil der Projektionsinformation wiederrum ausgeben bzw. deren Ausgabe veranlassen kann,
- zumindest eine Projektionsvorrichtung (380), die dazu konfiguriert ist, zumindest einen ersten Teil der Projektionsinformation wiederzugeben.

10. System (100), umfassend:
- zumindest zwei Smartpoles (130-1, 130-2, 300), wobei die zumindest zwei Smartpoles (130-1, 130-2, 300) jeweils nach Anspruch 9 ausgebildet sind.

## Claims

1. A method performed by at least one smart pole (130-1, 130-2, 300) as intelligent street lighting, wherein the at least one smart pole (130-1, 130-2, 300) comprises at least one sensor technology (370), at least one projection device (380), and a communication interface (340), comprising:
- detecting an object (160) by means of the at least one sensor technology (370) within a detection radius (150-1, 150-2) that is predefined or defined according to predetermined rules, wherein the detection radius (150-1, 150-2) comprises at least one area within which the object (160) is at least partially present;
- determining a piece of projection information indicative of at least one piece of information that is reproducable visually and/or auditorily, wherein the projection information is determined at least partially based on the detected object (160) and a piece of rule information, wherein the piece of rule information indicates whether or not a projection should be made for the object (160) to be perceived; and
- outputting or causing the outputting of the piece of projection information,
- wherein at least a second portion of the piece of projection information is output to or caused to be output to at least one further smart pole (130-1, 130-2, 300) by means of the communication interface (340) so that this further smartpole (130-1, 130-2, 300) can in turn output or cause the outputting of at least the second portion of the piece of the projection information,
- wherein at least a first portion of the piece of the projection information is reproduced by the at least one projection device (380) and at least the second portion of the piece of projection information is reproduced by a second projection device of the further smart pole (130-1, 130-2, 300).

2. The method according to claim 1, wherein at least the second portion of the piece of the projection information is transmitted to the other smart pole (130-1, 130-2, 300) by means of a wireless communication link and/or wired communication link.

3. The method according to any of the preceding claims, wherein the projection devices (380) of the smart pole (130-1, 130-2, 300) and the further smart pole (130-1, 130-2, 300) are laser projection devices.

4. The method according to any of the preceding claims, wherein the piece of the projection information is indicative of one or more of the following object-dependent pieces of information:
- navigation information piece;
- location-based information piece; and
- object-related information piece.

5. The method according to any of the preceding claims, wherein the piece of projection information is indicative of one or more of the following object-independent pieces of information:
- time and/or location information piece;
- advertising information piece;
- traffic volume; and
- crowd size.

6. The method according to any of the preceding claims, wherein the detection of the object (160) further comprises:
- classifying the object (160); and/or
- determining a piece of motion information indicative of a direction of motion, velocity of motion, and/or orientation of the object (160) within the detection radius (150-1, 150-2) of the smart pole (130-1, 130-2, 300).

7. The method according to claim 6, wherein the piece of the projection information is further determined based on the classified object (160) and/or the determined piece of motion information.

8. The method according to claim 5 or claim 6, wherein the object (160) is classified into at least one of the following classes:
- pedestrian;
- motor vehicle;
- two-wheeled vehicle; and
- mobile sports equipment.

9. Smartpole as intelligent street lighting, comprising:
- at least one sensor technology (370) configured to detect an object within a predefined detection radius (150-1, 150-2) or a detection radius defined according to predetermined rules, wherein the detection radius (150-1, 150-2) comprises at least one area within which the object (160) is at least partially present;
- a processor (310) configured to determine a piece of projection information indicative of at least one piece of information that is reproducable visually and/or audibly, wherein the piece of projection information is determined at least in part based on the detected object (160) and a piece of rule information, wherein the piece of the rule information indicates whether or not a projection should be made for the object (160) to be perceived;
- a communication interface (340) configured to output at least a second portion of the piece of projection information to at least one further smart pole (130-1, 130-2, 300) so that a projection device (380) of the further smart pole (130-1, 130-2, 300) can in turn output at least the second portion of the piece of the projection information,
- at least one projection device (380) configured to reproduce at least a first portion of the piece of the projection information.

10. System (100) comprising:
- at least two smart poles (130-1, 130-2, 300), wherein the at least two smart poles (130-1, 130-2, 300) are each configured according to claim 9.

## Revendications

1. Méthode, exécutée par au moins un smartpole (130-1, 130-2, 300) en tant qu'éclairage routier intelligent, où l'au moins un smartpole (130-1, 130-2, 300) comprend au moins une technologie de capteurs (370), au moins un dispositif de projection (380) et une interface de communication (340), comprenant:
- détecter un objet (160) au moyen de la au moins une technologie de capteurs (370), à l'intérieur d'un rayon de détection (150-1, 150-2) prédéfini ou défini selon des règles prédéterminées, où le rayon de détection (150-1, 150-2) comprend au moins une surface à l'intérieur de laquelle l'objet (160) est au moins partiellement présent ;
- déterminer une information de projection indicative d'au moins une information reproductible visuellement et/ou auditivement, où l'information de projection est déterminée au moins partiellement basée sur l'objet détecté (160) et une information de règle, où l'information de règle est indicative de la question de savoir si une projection doit être effectuée pour être prise en connaissance par l'objet (160) ou non ; et
- émettre ou déclencher l'émission de l'information de projection,
- où au moins une deuxième partie de l'information de projection est émise vers au moins un autre smartpole (130-1, 130-2, 300) ou dont l'émission est déclenchée via l'interface de communication (340), de sorte que cet autre smartpole (130-1, 130-2, 300) peut à son tour émettre ou déclencher l'émission d'au moins la deuxième partie de l'information de projection,
- où au moins une première partie de l'information de projection est reproduite par le au moins un dispositif de projection (380) et au moins la deuxième partie de l'information de projection est reproduite par un deuxième dispositif de projection de l'autre smartpole (130-1, 130-2, 300).

2. Méthode selon la revendication 1, où au moins la deuxième partie de l'information de projection est transmise à l'autre smartpole (130-1, 130-2, 300) via une connexion de communication sans fil et/ou filaire.

3. Méthode selon l'une des revendications précédentes, où les dispositifs de projection (380) du smartpole (130-1, 130-2, 300) et de l'autre smartpole (130-1, 130-2, 300) sont des dispositifs de projection laser.

4. Méthode selon l'une des revendications précédentes, où l'information de projection est indicative d'une ou plusieurs des informations suivantes dépendant de l'objet :
- information de navigation ;
- information de localisation ; et
- information relative à l'objet.

5. Méthode selon l'une des revendications précédentes, où l'information de projection est indicative d'une ou plusieurs des informations suivantes indépendantes de l'objet :
- information temporelle et/ou de localisation ;
- information publicitaire ;
- flux de trafic ; et
- foule.

6. Méthode selon l'une des revendications précédentes, où détecter l'objet (160) comprend en outre :
- classifier l'objet (160) ; et/ou
- déterminer une information de mouvement indicative d'une direction de mouvement, d'une vitesse de mouvement et/ou d'une orientation de l'objet (160) à l'intérieur du rayon de détection (150-1, 150-2) du smartpole (130-1, 130-2, 300).

7. Méthode selon la revendication 6, où l'information de projection est en outre déterminée basée sur l'objet classifié (160) et/ou sur l'information de mouvement déterminée.

8. Méthode selon la revendication 5 ou la revendication 6, où l'objet (160) est classifié dans au moins l'une des classes suivantes :
- piéton ;
- véhicule motorisé ;
- deux-roues ; et
- équipement sportif mobile.

9. smartpole en tant qu'éclairage routier intelligent comprenant :
- au moins une technologie de capteurs (370), configurée pour détecter un objet à l'intérieur d'un rayon de détection (150-1, 150-2) prédéfini ou défini selon des règles prédéterminées, où le rayon de détection (150-1, 150-2) comprend au moins une surface à l'intérieur de laquelle l'objet (160) est au moins partiellement présent ;
- un processeur (310), configuré pour déterminer une information de projection indicative d'au moins une information reproductible visuellement et/ou auditivement, où l'information de projection est déterminée au moins partiellement basée sur l'objet détecté (160) et une information de règle, où l'information de règle est indicative de la question de savoir si une projection doit être effectuée pour être prise en connaissance par l'objet (160) ou non ;
- une interface de communication (340), configurée pour émettre au moins une deuxième partie de l'information de projection vers au moins un autre smartpole (130-1, 130-2, 300) ou pour déclencher son émission, de sorte qu'un dispositif de projection (380) de cet autre smartpole (130-1, 130-2, 300) peut à son tour émettre ou déclencher l'émission d'au moins la deuxième partie de l'information de projection,
- au moins un dispositif de projection (380), configuré pour reproduire au moins une première partie de l'information de projection.

10. Système (100), comprenant :
- au moins deux smartpoles (130-1, 130-2, 300), où les au moins deux smartpoles (130-1, 130-2, 300) sont respectivement configurés selon la revendication 9.
